(19) Europäisches Patentamt
European Patent Office
Office européen des brevets

(11) **EP 3 294 787 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **16722156.3**

(22) Anmeldetag: **09.05.2016**

(51) Int Cl.:
*C08G 18/48* (2006.01)     *C08G 18/76* (2006.01)
*C08K 3/00* (2018.01)     *C08G 18/18* (2006.01)
*C08G 18/32* (2006.01)     *C08G 18/42* (2006.01)

(86) Internationale Anmeldenummer:
**PCT/EP2016/060287**

(87) Internationale Veröffentlichungsnummer:
**WO 2016/180757 (17.11.2016 Gazette 2016/46)**

(54) **PUR/PIR-HARTSCHAUMSTOFFE AUS ISOPROPYLIDENDIPHENOL-BASIERTEN POLYETHERN**

PUR/PIR RIGID FOAMS MADE FROM ISOPROPYLIDENDIPHENOL BASED POLYETHERS

MOUSSES RIGIDES PUR ET PIR EN POLYÉTHERS À BASE D'ISOPROPYLIDÈNEDIPHÉNOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2015 EP 15167106**
**05.02.2016 EP 16154562**

(43) Veröffentlichungstag der Anmeldung:
**21.03.2018 Patentblatt 2018/12**

(73) Patentinhaber: **Covestro Deutschland AG**
**51373 Leverkusen (DE)**

(72) Erfinder:
• **NEFZGER, Hartmut**
**50259 Pulheim (DE)**
• **SCHLEIERMACHER, Stephan**
**50259 Pulheim (DE)**
• **LORENZ, Klaus**
**41539 Dormagen (DE)**

(74) Vertreter: **Levpat**
**c/o Covestro AG**
**Gebäude 4825**
**51365 Leverkusen (DE)**

(56) Entgegenhaltungen:
• **KULESZA K ET AL: "Thermal decomposition of bisphenol A-based polyetherurethanes blown with pentane", JOURNAL OF ANALYTICAL AND APPLIED PYROLYSIS, ELSEVIER BV, NL, Bd. 76, Nr. 1-2, 1. Juni 2006 (2006-06-01), Seiten 243-248, XP024998780, ISSN: 0165-2370, DOI: 10.1016/J.JAAP.2005.12.002 [gefunden am 2006-06-01]**

EP 3 294 787 B1

**Beschreibung**

Die vorliegende Erfindung betrifft eine neue Polyolzusammensetzung aus Isopropylidendiphenolbasierten Polyethern, welche sich in vorteilhafter Weise für die Herstellung von Polyurethan-Polyisocyanurat-(PUR-/PIR)-Hartschaumstoffen einsetzen lässt, sowie deren Herstellung und Verwendung in PUR/PIR-Hartschäumen.

Polyurethan-Polyisocyanurat-(PUR-/PIR)-Hartschaumstoffe werden typischerweise durch Umsetzung einer Polyol- mit einer Isocyanatkomponente in Gegenwart eines Treibmittels hergestellt. Weiterhin können auch Additive wie Schaumstabilisatoren und Flammschutzmittel zugesetzt werden. PUR-PIR-Hartschaumstoffe verfügen, verglichen mit anderen Hartschaumstoffen wie beispielsweise PUR-Hartschaumstoffen, über eine exzellente thermische Stabilität und verbesserte Brandeigenschaften. Die Ursache dieser verbesserten Eigenschaften wird Isocyanurat-Strukturelementen zugeschrieben.

Aus wirtschaftlichen Gründen ist es erstrebenswert möglichst preiswerte Rohstoffe einzusetzen. Bezogen auf die Isocyanat-reaktive Komponente einer PUR/PIR-Hartschaumrezeptur bedeutet dies beispielsweise die Verwendung von an sich wertlosen Produktionsrückständen, wobei als Grundvoraussetzung das Vorhandensein oder die Erzeugbarkeit von Hydroxylgruppen gegeben sein muss. Als ein weiterer Aspekt der Verwendung derartiger Produktionsrückstände sei das Streben nach verbesserter Nachhaltigkeit genannt. Die Umarbeitung von Produktionsrückständen zu wertvollen PUR-/PIR-Hartschäumen vermeidet deren Entsorgung, etwa durch Verbrennen, und schont somit die Umwelt und trägt zur Reduktion des Verbrauchs an sich knapper Rohstoffe, letztlich des Rohöls, bei.

Ein solcher Produktionsrückstand liegt im Destillationsrückstand der Bisphenol-A-Produktion vor. Rohes Bisphenol-A (BPA) wird aufgearbeitet, indem man das Umsetzungsprodukt von Aceton und Phenol mittels Destillation reinigt, wobei als Destillationsrückstand sogenanntes BPA-Harz anfällt. Je nach Intensität dieses Destillationsprozesses kann ein derartiges BPA-Harz durchaus noch erhebliche Anteile an 4,4'-Isopropylidendiphenol aufweisen, z.B. 10 bis 60 Gew.-%. Die übrigen Anteile verteilen sich auf andere von Phenol, Aceton und Bisphenol-A abgeleitete Strukturelemente, wie z.B. die 2,4'- und 2,2'-Isomeren des Bisphenol-Grundkörpers. Eine beispielhafte Zusammensetzung ist in KR 2002 0065658 A aufgeführt. Abweichungen hiervon können in Einzelfällen erheblich sein. Dessen ungeachtet umfasst der Begriff des BPA-Harzes im Rahmen der vorliegenden Anmeldung grundsätzlich alle Destillationsrückstände von Bisphenol-A-Produktionen.

Abhängig vom Destillationsprozess ist weiterhin auch die Konsistenz des BPA-Harzes. Zwar wird der Schmelzpunkt des Bisphenol-A (ca. 155 °C) normalerweise deutlich unterschritten, jedoch liegt der Erweichungspunkt des BPA-Harzes immer noch so hoch, dass ein direkter Einsatz als Isocyanatreaktive Komponente schon aus diesem Grund nicht in Frage kommt. Beispielsweise erweichen BPA-Harze bei 70 bis 100 °C; sie können aber auch erst bei höheren Temperaturen fließfähig sein. Des Weiteren sei erwähnt, dass sich die phenolischen Hydroxylgruppen, wie sie im BPA-Harz vorliegen, im Allgemeinen nicht zur Synthese von Polyurethanen eignen, insbesondere dann nicht, wenn gute Dauergebrauchseigenschaften, insbesondere bei erhöhter Temperatur, gefragt sind. Urethangruppen auf Basis phenolischer Hydroxylgruppen gelten als thermolabil.

Eine Aufgabe der vorliegenden Erfindung ist es daher, ein Verfahren zur Herstellung von Polyurethan-Polyisocyanurat-Hartschaumstoffen unter Verwendung von kostengünstigen Polyolen, basierend auf hydroxylfunktionellen Rückständen aus der Bisphenol-A-Produktion, bereitzustellen.

Polyurethan-Polyisocyanurat (PUR/PIR) Hartschaumstoffe im Sinne dieser Anmeldung sind dadurch gekennzeichnet, dass Isocyanatgruppen im Überschuss gegenüber Isocyanat-reaktiven Gruppen eingesetzt werden, so dass sich sowohl Urethangruppen als auch in Folge von Isocyanat-Trimerisierungsreaktionen Isocyanuratstrukturelemente, und gegebenenfalls durch die Reaktion mit Wasser Harnstoffgruppen bilden.

Die PUR/PIR - Hartschaumstoffe können neben den Urethangruppen, Harnstoffgruppen und Isocyanuratstrukturen noch weitere Gruppen enthalten, z.B. solche, wie sie durch Reaktion der Isocyanatgruppe mit anderen Gruppen als mit Hydroxylgruppen bzw. weiteren Isocyanatgruppen entstehen. Die Reaktion der Isocyanatgruppe mit Harnstoffgruppen führt beispielsweise zu Biuretstrukturen, in ähnlicher Weise werden durch Reaktion von Isocyanatgruppen mit Urethangruppen Allophanatstrukturen erhalten. Diese Strukturen liegen dann gemeinsam mit den Urethan-, Harnstoff- und Isocyanuratgruppen im Polymer vor.

Die Erfindung betrifft ferner die so erhältlichen PUR/PIR-Hartschaumstoffe sowie die Verwendung der nach dem erfindungsgemäßen Verfahren herstellbaren Polyolmischungen bei der Herstellung von PUR/PIR-Hartschaumstoff-Verbundelementen mit geeigneten Deckschichten.

Ein weiterer Gegenstand der Erfindung sind die so erhältlichen Verbundelemente, herstellbar unter Verwendung konventioneller Maschinen.

Weitere Gegenstände der Erfindung sind bei Raumtemperatur fließfähige Derivate des BPA-Harzes, die durch Alkoxylierung erzeugt werden, sowie ein Verfahren zu deren Herstellung.

Die Alkoxylierung von Bisphenol A selbst ist bekannt (Mihail Ionescu in Chemistry and Technology of Polyols for Polyurethanes, Rapra Technology Limited, Shawbury, Shrewsbury, Shropshire, SY4 4NR, United Kingdom, 2005, S. 403 ff), wobei drei Methoden angeführt werden:

1.) Alkoxylierung von Bisphenol A (mit Ethylenoxid (EO) oder Propylenoxid (PO)) als Suspension in einem inerten Lösungsmittel bei 90 bis 120 °C in Gegenwart eines basischen Katalysators, insbesondere in Gegenwart von tertiären Aminen.

2.) Alkoxylierung von Bisphenol A als Suspension in flüssigem PO in Gegenwart eines tertiären Amins als Katalysator, wobei nach ca. 2 Stunden des Rührens bei 90 bis 100 °C in einem zweiten Schritt EO zugegeben wird.

3.) Alkoxylierung von Bisphenol-A als ca. 50 %-ige Suspension in separat gefertigtem Reaktionsprodukt in Gegenwart eines tertiären Amins als Katalysator.

Generell nachteilig an diesen drei Verfahren ist der Einsatz des vergleichsweisen wertvollen Bisphenol-A, sowie die technisch nicht einfache Umsetzung als Suspension, die stets die Möglichkeit von unerwünschten Ablagerungen in sich trägt. Besonders nachteilig an Methode 1 ist die Verwendung eines inerten Lösungsmittels, welches zum einen die Raum-Zeit-Ausbeute verringert, zum anderen aufwändig abgetrennt werden muss. Verfahrensvariante 2 ist aus prozesssicherheitstechnischer Sicht als kritisch einzustufen, da ein Durchgehen der Reaktion, beispielsweise bei Ausfall der Reaktorkühlung, zu einer signifikanten adiabaten Erwärmung des reagierenden Gemisches führen und damit sogar die exotherme Zersetzung des Reaktorinhalts auslösen kann. Besonders nachteilig an Methode 3 ist die Verwendung des Reaktionsproduktes als Suspendierungsmittel, welches ebenfalls die Raum-Zeit-Ausbeute negativ beeinflusst.

Diese Nachteile zu beseitigen ist ebenfalls eine Aufgabe der vorliegen Erfindung.

In dem oben genannten Stand der Technik beschreibt Ionescu die Möglichkeit, reines alkoxyliertes Bisphenol A als Ausgangsmaterial für die Herstellung von Urethan-Isocyanurat-Schäumen zu verwenden. Eigene Untersuchungen zeigen jedoch, dass das Brandverhalten von PUR-/PIR-Schäumen basierend auf reinem ethoxyliertem Bisphenol A nicht befriedigend ist (siehe auch Beispiele A1.5 in Tabelle 1 und B1.7 in Tabelle 3).

KR 2002 0065658 A beschreibt die Verwendung eines BPA-Harzes als Starter für die KOHkatalysierte Umsetzung ausschließlich mit Propylenoxid, wobei Polyolmischungen mit Hydroxylzahlen von 300 bis 500 mg KOH/g und mit Viskositäten bei 25 °C von 1500 bis 4000 cps (cps entspricht mPas) erhalten werden. Weiterhin ist die Umsetzung der Polyolmischungen zu Polyurethan(PUR)-Hartschaum erwähnt. Der Einsatz für PUR/PIR-Hartschäume wird nicht beschrieben.

Polyether, welche auf Propylenoxid basieren, weisen überwiegend sekundäre Hydroxylendgruppen auf. Polyolkomponenten für PUR/PIR-Schäume, seien es Polyether- oder Polyesterpolyole, sollten jedoch bevorzugt primäre OH-Endgruppen aufweisen. Das in KR 2002 0065658 beschriebenen propoxylierte BPA-Harz ist daher für die Herstellung von PUR/PIR - Schäumen nicht besonders gut geeignet.

Der Stand der Technik offenbart somit nicht die Herstellung eines unter Verwendung von vorwiegend Ethylenoxid alkoxylierten BPA-Harzes sowie seinen Einsatz in PUR-/PIR-Schäumen. Abgesehen von Problemen, welche bei Einsatz eines solchen Harzes auftreten können (z.B. aufgrund von Löslichkeitsproblemen), sind die Eigenschaften der so erhaltenen Polyolmischung, z.B. dessen Viskosität und in Bezug auf die Umsetzung zu einem PUR-PIR-Schaum (z.B. Mischbarkeit mit der Polyisocyanatkomponente), nicht bekannt. Das bei Einsatz eines ausschließlich auf Bisphenol-A basierenden Ethoxylates als Polyol zur Herstellung von PUR / PIR - Schäumen beobachtete Brandverhalten legt den Einsatz eines unter Verwendung von vorwiegend Ethylenoxid alkoxylierten BPA-Harzes nicht nahe. Auch andere Eigenschaften, wie Wärmeleitzahl, Adhäsion zu Deckschichten, Schrumpfverhalten, Flammwidrigkeit von solchen PUR-/PIR-Schäumen sind nicht bekannt.

Überraschend wurde nun gefunden, dass ein BPA-Harz zunächst ethoxyliert und das erfindungsgemäße ethoxylierte BPA-Harz nach einem Standardverfahren zu qualitativ guten PUR/PIR-Schäumen verarbeitet werden kann. Im Sinne der vorliegenden Erfindung ist unter "ethoxyliert" zu verstehen, dass das zur Alkoxylierung des BPA-Harzes verwendete Alkylenoxidgemisch zu mindestens 50 Gew.-% aus Ethylenoxid, bevorzugt zu mindestens 70 Gew.-% aus Ethylenoxid, besonders bevorzugt zu mindestens 90 Gew.-% aus Ethylenoxid, insbesondere bevorzugt zu mindestens 95 Gew.-% und ganz besonders bevorzugt zu 100 Gew.-% aus Ethylenoxid besteht. In gleicher Weise umfasst der Begriff "Ethoxylierung" die Alkoxylierung des BPA-Harzes mit Epoxidzusammensetzungen mit den angegebenen Ethylenoxidgehalten. Das Ethylenoxid kann im Gemisch mit den ggf. mitzuverwendenden anderen Alkylenoxiden oder blockweise als Anfangs-, Mittel- oder Endblock dosiert werden. Bevorzugt hergestellt und eingesetzt werden BPA-Harz-Alkoxylate mit Ethylenoxidendblöcken, da diese durch erhöhte Konzentrationen an primären Endgruppen gekennzeichnet sind, welche den Systemen die für PUR/PIR-Schaumstoffanwendungen notwendige Isocyanatreaktivität verleihen

Bei dem erfindungsgemäß eingesetzten BPA-Harz handelt es sich um eine Zusammensetzung, welche als Destillationsrückstand bei der Bisphenol A-Produktion anfällt. Das BPA-Harz enthält mindestens 10 Gew.-%, bevorzugt 10 - 60 Gew.-% an 4,4'-Isopropylidendiphenol, sowie mindestens 5 Gew.-%, bevorzugt 10 - 40 Gew.-% der 2,4'- und 2,2'-Isomeren des Bisphenol-Grundkörpers, sowie mindestens 10 Gew.-%, bevorzugt 10 - 40 Gew.-% an Verbindungen mit Chroman- und/oder Indan-Grundkörpem.

Bei dem erfindungsgemäßen ethoxylierten BPA-Harz (im Weiteren auch genannt: "BPA-Harz-Ethoxylat") handelt es sich um eine Zusammensetzung, umfassend

a) mindestens 10 Gew.-%, bevorzugt mindestens 20 Gew.-%, besonders bevorzugt mindestens 30 Gew.-% eines Ethoxylates von 4,4'-Isopropylidendiphenol,

b) mindestens 5 Gew.-%, bevorzugt mindestens 10 Gew.-%, eines Ethoxylates von 2,4'- und 2,2'-Isopropylidendiphenol, und

c) mindestens 10 Gew.-%, bevorzugt mindestens 20 Gew.-%, außerdem bevorzugt mindestens 30 Gew.-%, besonders bevorzugt 40 Gew.-% eines Ethoxylates weiterer Komponenten, die Strukturelemente enthalten, welche von Phenol, Aceton und / oder Isopropylidendiphenol abgeleitet sind (ausschließlich der Isomeren des Isopropylidendiphenols).

Die Angaben in Gew.-% beziehen sich jeweils auf das Gesamtgewicht der Zusammensetzung.

Die Ethoxylierung des BPA-Harzes kann in Anlehnung an bekannte Methoden zur Alkoxylierung in homogener Phase durchgeführt werden, z.B. indem man das BPA-Harz in einem Rührautoklaven zusammen mit einem geeigneten Katalysator vorlegt und bei erhöhter Temperatur langsam Ethylenoxid zudosiert. Als Katalysatoren kommen tertiäre Amine mit aliphatischen, cycloaliphatischen, aromatischen und/oder araliphatischen an das Stickstoffatom gebundenen Resten, und/oder aromatische Amine in Frage, wobei das Stickstoffatom auch Teil eines Ringsystems sein kann und/oder wobei das Stickstoffatom Teil eines aromatischen Systems sein kann. Systeme mit mehreren Stickstoffatomen sind selbstverständlich umfasst. Ebenfalls können Hydroxide oder Oxide wie die der Alkali- und Erdalkalimetalle als Katalysatoren verwendet werden. Bevorzugt werden die erwähnten tertiären und/oder aromatischen Amine eingesetzt. Als Katalysatoren eingesetzte Amine können weitere funktionelle Gruppen, wie z.B. Hydroxylgruppen, einschließlich phenolische Hydroxylgruppen oder auch isocyanatreaktive Aminogruppen aufweisen. Folgende tertiäre Amine seien beispielhaft genannt: Triethylendiamin, N,N-Dimethylcyclohexylamin, 1-Methyl-4-dimethylaminoethyl-piperazin, Triethylamin, Tributylamin, N,N-Dimethylbenzylamin, Dicyclohexylmethylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, N,N,N',N'-Tetramethylhexandiamin, Pentamethyl-diethylentriamin, Pentamethyldipropylentriamin , Tetramethyldiaminoethylether, N,N'-Dimethylpiperazin, 1-Azabicyclo[3.3.0]octan, Bis-(dimethylaminopropyl)-harnstoff N-Methylmorpholin, N-Ethylmorpholin, N-Cyclohexylmorpholin, 2,3-Dimethyl-3,4,5,6-tetrahydropyrimidin, Triethanolamin, Triisopropanolamin, N-Methyldiethanolamin, N-Ethyldiethanolamin, N,N-Dimethylaminoethanol und Tris-(N,N-di-methylaminopropyl)-s-hexahydrotriazin. Beispiele für geeignete aromatische Amine sind 1,2-Dimethylimidazol, N-Methylimidazol, Imidazol und/oder N,N-dimethylaminopyridin. Geeignete Hydroxide der Alkali- und Erdalkalimetalle sind Lithium- Natrium-. Kalium-, Rubidium-, Caesium-, Magnesium-, Calcium-, Strontium- und Bariumhydroxid.

Bei den tertiären Aminen sind solche bevorzugt, die höchstens 3 aminische N-Atome aufweisen. Von den aromatischen Aminen sind Imidazol und seine Derivate, insbesondere N-Methylimidazol, bevorzugt.

Bei den Alkali- und Erdalkalihydroxid sind Natrium- und Kaliumhydroxid bevorzugt.

Vorteilhaft werden bei Verwendung von tertiären und/oder aromatischen Aminen Katalysatorkonzentrationen 300 bis 5000 ppm, bezogen auf alle Einsatzstoffe, eingesetzt. Alkali- und Erdalkalihydroxide werden in Konzentrationen von 50 bis 5000 ppm, bevorzugt von 100 bis 3000 ppm, besonders bevorzugt von 100 bis 1500 ppm verwendet.

Es können auch Gemische mehrerer aminischer Katalysatoren, Gemische aus mehreren Alkali- und Erdalkalihydroxiden, sowie Gemische aus aminischen Katalysatoren und Alkali- bzw. Erdalkalihydroxiden eingesetzt werden.

Neben Ethylenoxid zur Mitverwendung ggf. geeignete Alkylenoxide sind beispielsweise Propylenoxid, 1,2-Butylenoxid bzw. 2,3-Butylenoxid und/oder Styroloxid. Bevorzugt wird ggf. Propylenoxid mitverwendet. Der Anteil an Ethylenoxid sollte mindestens 50 Gew.-%, bevorzugt mindestens 70 Gew.-%, besonders bevorzugt mindestens 90 Gew.-%, insbesondere bevorzugt mindestens 95 Gew.-% und ganz besonders bevorzugt 100 Gew.-% bezogen auf die Gesamtmenge der dosierten Alkylenoxide betragen.

Erfindungsgemäße ethoxylierte BPA-Harze sind weiterhin solche, deren Katalysatoren nach beendeter Synthese nicht neutralisiert werden. Selbstverständlich können den BPA-Harz-Ethoxylaten Hilfs- und Zusatzstoffe, wie z.B. Antioxidantien, zugesetzt werden.

Das Molverhältnis von BPA-Harz zu ethylenoxidhaltigem Alkylenoxidgemisch wird so gewählt, dass pro phenolischer Hydroxylgruppe mindestens 1,5 mole Alkylenoxid, bevorzugt mindestens 1,5 mole Ethylenoxid eingesetzt werden.

Die erfindungsgemäßen ethoxylierten BPA-Harze weisen Hydroxylzahlen von 100 bis 400 mg KOH/g, bevorzugt 120 bis 300, besonders bevorzugt 130 bis 250 und bei 25 °C gemessene Viskositäten von 600 bis 10000 mPas, bevorzugt 800 bis 8000, besonders bevorzugt 1000 bis 6000 auf.

Da die Konzentration an phenolischen Hydroxylgruppen im BPA-Harz im Einzelfall analytisch schwierig erfassbar sein kann, kann es vorteilhaft sein, zunächst einen Probeethoxylierungsversuch mit einer ausreichend hohen Menge an Ethylenoxid durchzuführen und aus der gefundenen Hydroxylzahl des Produktes und der Menge an eingesetztem BPA-Harz auf die Konzentration an phenolischen Hydroxylgruppen im BPA-Harz zurückzuschließen.

Weiterhin hat es sich als vorteilhaft erwiesen, das BPA-Harz bei erhöhter Temperatur, z.B. 50 bis 100 °C ggf. bereits zusammen mit dem verwendeten Katalysator vorzulegen, den Luftsauerstoff durch mehrmaliges Evakuieren und anschließendes Belüften mit Stickstoff zu verdrängen, wobei Katalysatoren mit niedrigen Siedepunkten, etwa Triethylamin erst nach dem Verdrängen des Luftsauerstoffes zudosiert werden sollten.

Die Umsetzung der phenolischen Hydroxylgruppen des BPA-Harzes mit dem ethylenoxidhaltigen Alkylenoxidgemisch erfolgt bei erhöhter Temperatur, vorzugsweise bei 70 bis 140 °C, besonders bevorzugt bei 90 bis 130 °C. Hierbei kann auch ein Lösungsmittel zum Einsatz kommen. Bevorzugt wird die Umsetzung jedoch ohne Lösungsmittel ausgeführt. Die Temperatur der exothermen Alkylenoxidadditionsreaktion muss gegebenenfalls durch Kühlung auf dem gewünschten Niveau gehalten werden

Die Zugabe des ethylenoxidhaltigen Alkylenoxidgemischs zur Mischung bestehend aus BPA-Harz und Katalysator erfolgt vorzugsweise kontinuierlich über einen längeren Zeitraum, beispielsweise 4 bis 20 Stunden. Das ethylenoxidhaltige Alkylenoxidgemisch kann aber auch diskontinuierlich in mehreren Portionen zugeben werden. Die Dosierung des wenigstens einen Alkylenoxids erfolgt so, dass die sicherheitstechnischen Druckgrenzen des Reaktorsystems nicht überschritten werden. Diese richten sich naturgemäß nach den im Einzelfall vorliegenden apparativen Gegebenheiten, wobei der Prozess im Allgemeinen bei einem Absolutdruck im Bereich von 1 mbar bis 10 bar, besonders bevorzugt von 1 mbar bis 4 bar ausgeführt wird. Insbesondere bei der Dosierung von reinem Ethylenoxid ist aus verfahrenssicherheitstechnischen Gründen vorteilhafterweise darauf zu achten, dass ein ausreichender Inertgaspartialdruck im Reaktor während der Anfahr- und Dosierphase aufrechterhalten wird. Dieser sollte in der Regel 50 % des Gesamtdrucks nicht unterschreiten. Der erforderliche Inertgaspartialdruck kann beispielsweise durch Edelgase oder Stickstoff eingestellt werden.

Nach beendeter Zugabe des ethylenoxidhaltigen Alkylenoxidgemischs schließt sich üblicherweise eine Nachreaktion an, um die Umsetzung zu vervollständigen. Diese liegt in der Regel im Bereich von 5 - 30 Stunden, kann aber auch mehr als 30 Stunden betragen. Nach Ablauf der Nachreaktionszeit kann ein Vakuumschritt folgen, um Reste ggf. nicht umgesetzter Epoxide aus der Reaktionsmischung zu entfernen. Dieser Vakuumschritt kann beispielsweise bei einem Absolutdruck von 500 mbar bis 10 mbar über eine Zeitdauer von 0,1 bis 5 Stunden durchgeführt werden. Die Entfernung von Spuren unreagierter Epoxide oder anderer geruchsbildender flüchtiger organischer Verbindungen kann darüberhinaus nach der (Nach-)Reaktionsphase und ggf. dem Vakuumschritt auch durch Strippen unterstützt werden. Durch Strippen werden flüchtige Bestandteile, wie beispielsweise (Rest-)Alkylenoxide oder nicht alkoxylierbare Nebenkomponenten aus dem BPA-Harz, unter Einleiten von Inertgasen und / oder Wasserdampf in die Flüssigphase bei gleichzeitig angelegtem Vakuum, beispielsweise durch Durchleiten von Inertgas und/oder Wasserdampf bei einem Absolutdruck von 5 mbar bis 500 mbar. entfernt. Hilfsweise kann das Einleiten von Wasserdampf auch durch direktes Einleiten von Wasser unter die Flüssigkeitsoberfläche, bevorzugt bei Temperaturen > 100 °C und einem Absolutdruck von 5 mbar bis 500 mbar ersetzt werden. Die einzuleitende Wassermenge bzw. die einzuleitende Wasserdampfmenge kann experimentell ermittelt werden, bevorzugt werden zwischen 10 und 30 Gew.-% Wasser bzw. Wasserdampf, bezogen auf die zu reinigende Polyolmenge eingeleitet. Das Entfernen flüchtiger Bestandteile, entweder im Vakuum und / oder durch Strippen, erfolgt bei Temperaturen von 20 °C bis 200 °C, bevorzugt bei 50 °C bis 160 °C und vorzugsweise unter Rühren. Die Strippvorgänge können auch in sog. Strippkolonnen durchgeführt werden, in denen dem Produktstrom ein Inertgas- oder Wasserdampfstrom entgegengeleitet wird. Bei solchen Strippkolonnen handelt es sich bevorzugt um Kolonnen mit Einbauten oder gepackte Kolonnen. In solchen Kolonnen wird die Überführung der flüchtigen Nebenkomponenten in die Gasphase durch Vergrößerung der Kontaktfläche zwischen Flüssigkeit und Gasraum beschleunigt. Bevorzugt wird das Strippen mit Wasserdampf oder Wasser, ggf. durch gleichzeitiges Einleiten von Inertgas(en) durchgeführt. Eine ausführliche Darstellung von für die Durchführung von Alkoxylierungs- (Ethoxylierungs)-Reaktionen geeigneter Reaktionsführungsbedingungen und Apparaten ist beispielsweise in US 2014/0243560 A1 gegeben.

So erhältliche BPA-Harz-Ethoxylate werden erfindungsgemäß zur Herstellung von PUR/PIR-Hartschäumen eingesetzt.

In einer Ausführungsform werden die zur Alkoxylierung des BPA-Harzes eingesetzten basischen Katalysatoren neutralisiert.

Als geeignete Reagenzien zur Neutralisation des bei der Alkoxylierung des BPA-Harzes eingesetzten basischen Katalysators kommen organische und/oder anorganische Protonsäuren (Bronstedtsäuren) in Betracht. Bevorzugt sind nichtoxidierende organische und/oder anorganische Protonsäuren, beispielsweise Schwefelsäure, Phosphorsäure, Dibutylphosphat, Salzsäure, Milchsäure, Adipinsäure, Glutarsäure, Bernsteinsäure, oder ähnliche. Sie können dem Reaktionsgemisch sowohl in reiner Form oder als wässrige Lösung nach beendeter Alkoxylierungsreaktion zugesetzt werden. Bevorzugt ist die Verwendung von wässrigen Lösungen.

In gleicher Weise geeignet sind Polyesterpolyole mit Anteilen an endständigen Carboxylgruppen, wie sie durch Polykondensation aus niedermolekularen Polyolen und niedermolekularen Polycarbonsäuren erhalten werden können.

Die Neutralisation erfolgt beispielsweise durch Zugabe der Säure unter Rühren und bei Temperaturen des Reaktionsgemisches von 25 bis 95 °C; sie kann aber auch bei niedrigeren oder höheren Temperaturen erfolgen. Die Menge Neutralisationsagenz wird dabei so bemessen, dass je Mol an basischem Katalysator mindestens 0,5 Mole saure Protonen eingetragen werden. Bevorzugt sind Molverhältnisse von basischem Katalysator zu sauren Protonen von 1 : 0,5 bis 1 : 5, besonders bevorzugt 1 : 0,75 bis 1 : 2 und ganz besonders bevorzugt 1 : 0,8 bis 1 :1,5.

Aminische Katalysatoren können auch durch Alkylierung neutralisiert werden. Geeignete Reagenzien zur Alkylierung sind beispielsweise organische Sulfonsäureester, z.B. p-Toluolsulfonsäurealkylester, Schwefelsäuredialkylester, z.B. Dimethylsulfat, Methyljodid, Oxalsäuredialkylester und Alkylester anderer organischer Säuren. Die Alkylreste können beliebiger Struktur sein, beispielhaft genannt werden können Methyl, Ethyl, Propyl, Isopropyl, n-Butyl und Isobutyl. Bezüglich der Molverhältnisse geht man analog zur Neutralisierungsvariante mit Protonsäuren vor.

Es hat sich überraschenderweise gezeigt, dass über den Weg der Neutralisierung der basischen Katalysatoren ein vorteilhaftes Verarbeitungsverhalten des alkoxylierten BPA-Harzes in der Verschäumung zum PUR/PIR-Schaumstoff sowie vorteilhafte Schaumeigenschaften, z.B. im Hinblick auf Sprödigkeit, eingestellt werden können. Insbesondere ist es über den Weg der Neutralisierung möglich, Start- und Abbindezeiten der PUR/PIR - Reaktion einzustellen.

PUR/PIR-Hartschaumstoffe im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,1 MPa bis 5 MPa liegt.

Ein weiterer Gegenstand der vorliegenden Erfindung ist daher ein Verfahren zur Herstellung eines PUR/PIR-Schaumstoffes umfassend die Schritte

a) Umsatz wenigstens eines erfindungsgemäßen BPA-Harz-Ethoxylates mit
b) wenigstens einer polyisocyanathaltigen Komponente,
c) wenigstens einem Treibmittel,
d) wenigstens einem Katalysator,
e) gegebenenfalls wenigstens einem Flammschutzmittel und/oder weiteren Hilfs- und Zusatzstoffen
f) gegebenenfalls wenigstens einer weiteren Verbindung mit mindestens zwei gegenüber Isocyanaten reaktiven Gruppen.

Als polyisocyanathaltige Komponente kommen die für die Herstellung von PUR/PIR - Hartschaumstoffen verwendbaren aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von PUR/PIR-Hartschaumstoffen wird insbesondere Polymer-MDI eingesetzt. Die Bildung von Isocyanuratstrukturen erfolgt nach gegenwärtigem Kenntnisstand praktisch ausschließlich während der Verschäumungsreaktion und führt zu flammwidrigen PUR/PIR-Schaumstoffen, welche bevorzugt im technischen Bereich, beispielsweise im Bauwesen als Dämmplatte, Sandwichelemente und LKW-Aufbauten eingesetzt werden.

Als ggf. verwendbare weitere Verbindungen (f) mit mindestens zwei gegenüber Isocyanaten reaktiven Gruppen, das heißt mit mindestens zwei mit Isocyanatgruppen reaktiven Wasserstoffatomen, können Verbindungen eingesetzt werden, die nachfolgend allgemein beschrieben werden.

Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, NH$_2$-Gruppen und CH-aciden Gruppen, wie z.B. β-Diketo-Gruppen, im Molekül tragen. Zur Herstellung der nach dem erfindungsgemäßen Verfahren bevorzugt erhältlichen Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole.

Vorzugsweise eingesetzt werden Polyetherpolyole und/oder Polyesterpolyole. Für die Polyurethansynthese einsetzbare Polyether- und Polyesterpolyole sind dem Fachmann bekannt. Solche sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden.

Die Hydroxylzahl der verwendeten Polyether- und Polyesterpolyole beträgt vorzugsweise 25 bis 850 mg KOH/g, besonders bevorzugt 25 bis 450 mg KOH/g und eine Funktionalität von 2 bis 8. Ebenfalls bevorzugt ist eine Hydroxylzahl größer 160, besonders bevorzugt größer 200 mg KOH/g. In einer Ausführungsform werden auch Mischungen der vorgenannten Polyetherpolyole eingesetzt.

Weiterhin kann die Komponente (f) Kettenverlängerungs- und/oder Vernetzungsmittel enthalten. Als Kettenverlängerungs- und/oder Vernetzungsmittel kommen insbesondere di- oder trifunktionelle Amine und Alkohole, insbesondere Diole und/oder Triole mit Molekulargewichten kleiner als 400 g/mol, vorzugsweise von 60 bis 300, zum Einsatz.

Weiterhin werden Treibmittel (c) eingesetzt; der Begriff Treibmittel umfasst im Rahmen der vorliegenden Erfindung sowohl physikalische als auch chemische Treibmittel. Unter chemischen Treibmitteln werden dabei solche Verbindungen verstanden, die durch Reaktion mit Isocyanat gasförmige Produkte bilden. Demgegenüber werden unter physikalischen Treibmitteln solche Verbindungen verstanden, die in flüssiger oder gasförmiger Form eingesetzt werden und keine chemische Reaktion mit dem Isocyanat eingehen.

Unter physikalischen Treibmitteln versteht man Verbindungen, die in den Einsatzstoffen der Polyurethan-Herstellung gelöst oder emulgiert sind und unter den üblichen Reaktionsbedingungen verdampfen. Dabei handelt es sich beispielsweise um Kohlenwasserstoffe wie z.B. Cyclopentan, Isopentan und n-Pentan, Butan und Propan, halogenierte Kohlenwasserstoffe, und andere Verbindungen, wie zum Beispiel perfluorierte Alkane, wie Perfluorhexan, perfluorierte Alkene wie 1,1,1,2,3,4,5,5,5-Nonafluoro-4-(trifluoromethyl)pent-2-en, 1,1,1,3,4,4,5,5,5-Nonafluoro-2-(trifluoromethyl)pent-2-en oder cis-1,1,1,4,4,4-Hexafluoro-2-buten, Fluorchloralkene wie Trans- 1-chloro-3,3,3-trifluoropropen, sowie Ether, Ester, Ketone und/oder Acetale. Als Treibmittelkomponente (c) werden bevorzugt Kohlenwasserstoffe und/oder Wasser eingesetzt. Besonders bevorzugte Kohlenwasserstoffe sind n-Pentan, Cyclopentan, iso-Pentan und/oder Mischungen der Isomeren. Insbesondere werden Cyclopentan und/oder n-Pentan als Treibmittel (c) verwendet. Chemische Treibmittel sind beispielsweise Wasser und / oder Carbonsäuren, welche durch Reaktion mit Isocyanaten unter Harnstoff- bzw. Amidbildung Kohlendioxid freisetzen.

Die Treibmittelkomponente (c) setzt man bevorzugt in Mengen von 0,1 bis 30 Gew.-%, bevorzugt 0,5 bis 20 Gew.-%, besonders bevorzugt 0,7 bis 15 Gew.-%, bezogen auf das Gesamtgewicht der Komponenten (a) bis (f) ein. In einer bevorzugten Ausführungsform enthält das Treibmittelgemisch (c) Kohlenwasserstoffe, insbesondere n-Pentan und/oder Cyclopentan und Wasser.

In einer bevorzugten Ausführungsform ist mindestens ein Polyisocyanat (b) ausgewählt aus der Gruppe bestehend aus Toluylendiisocyanat (TDI), Diphenylmethandiisocyanat (MDI) und Polyphenylen-polymethylenpolyisocyanaten (Polymer-MDI) sowie aus deren Gemischen, und mindestens ein Treibmittel c) ausgewählt aus der Gruppe bestehend aus Wasser, Cyclopentan, n-Pentan, iso-Pentan, Fluorkohlenwasserstoffe und teil-halogenierte Alkene mit 3 oder 4 Kohlenstoff-Atomen, sowie aus deren Gemischen.

Als Katalysatoren (d) für die Herstellung der erfindungsgemäßen PUR/PIR-Hartschaumstoffe können beispielsweise die bekannten Polyurethan- bzw. Polyisocyanuratbildungskatalysatoren eingesetzt werden, beispielsweise organische Zinnverbindungen, wie Zinndiacetat, Zinndioctoat, Dibutylzinndilaurat und/oder stark basische Amine wie 2,2,2-Diazabicyclooctan, Triethylamin, Triethylendiamin, Pentamethyldiethylentriamin, N,N-Dimethylcyclohexylamin oder Bis(N,N-Dimethylaminoethyl)ether, N,N-Dimethylbenzylamin und N-Methylimidazol, sowie zur Katalyse der PIR-Reaktion beispielsweise Kaliumacetat, Natriumacetat, Natrium-N-[(2-hydroxy-5-nonylphenyl)methyl]-N-methylaminoacetat, 2,4,6-Tris[(3-dimethylamino)propyl]hexahydrotriazine, Kaliumoctoat und aliphatische quaternäre Ammoniumsalze, z.B. Tetramethylammoniumpivalat.

Die Katalysatoren werden vorzugsweise in Mengen von 0,05 bis 3 Gew.-%, vorzugsweise 0,06 bis 2 Gew.-%, bezogen auf das Gesamtgewicht aller Komponenten (a) bis (f), eingesetzt.

Die Umsetzung der vorstehend genannten Komponenten erfolgt gegebenenfalls in Anwesenheit von (e) Zusatzstoffen, wie z.B. Flammschutzmitteln, Füllstoffen, Zellreglern, Schaumstabilisatoren, oberflächenaktiven Verbindungen und/oder Stabilisatoren gegen oxidativen, thermischen oder mikrobiellen Abbau bzw. Alterung, bevorzugt in Anwesenheit von Flammschutzmitteln und/oder Schaumstabilisatoren. Als Schaumstabilisatoren werden Stoffe bezeichnet, welche die Ausbildung einer regelmäßigen Zellstruktur bei der Schaumbildung fordern. Beispielsweise sind genannt: Siliconhaltige Schaumstabilisatoren, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden.

Als Flammschutzmittel können im Allgemeinen die aus dem Stand der Technik bekannten Flammschutzmittel verwendet werden. Geeignete Flammschutzmittel sind beispielsweise bromierte Ether (z.B. Ixol® B251), bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zubereitungen, Aluminiumoxidhydrat, Antimontrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PUR- bzw. PUR-/PIR-Hartschaumstoffe verwendet werden. Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 30 Gew.-%, besonders bevorzugt von 0,3 bis 25 Gew.-%, insbesondere von 0,5 bis 5 Gew.-%, bezogen auf das Gesamtgewicht der Komponenten (a) bis (f) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

In einer Ausführungsform kommen folgende, auf alle Einsatzstoffe a) bis f) bezogene Einsatzanteile zur Anwendung:

19 bis 29 Gew.-% eines BPA-Harz-Ethoxylates a),
56 bis 74 Gew,-% einer polyisocyanathaltigen Komponente b),
0,7 bis 15 Gew.-% eines Treibmittels c),
0,06 bis 3 Gew.-% Katalysatoren d),
0,5 bis 5 Gew.-% eines Flammschutzmittel und/oder weiteren Hilfs- und Zusatzstoffen e) und
0 bis 10 Gew.-% an weiteren Verbindungen mit mindestens zwei gegenüber Isocyanaten reaktiven Gruppen f).

In einer bevorzugten Ausführungsform kommen folgende, auf alle Einsatzstoffe a) bis f) bezogene Einsatzanteile zur Anwendung:

22 bis 27 Gew.-% eines BPA-Harz-Ethoxylates a),
60 bis 68 Gew.-% einer polyisocyanathaltigen Komponente b),
3 bis 7 Gew.-% eines Treibmittels c),
0,5 bis 2 Gew.-% Katalysatoren d),
3 bis 5 Gew.-% eines Flammschutzmittel und/oder weiteren Hilfs- und Zusatzstoffen e) und
0 bis 4 Gew.-% an weiteren Verbindungen mit mindestens zwei gegenüber Isocyanaten reaktiven Gruppen f).

Zur Herstellung der Polyurethan-Hartschaumstoffe werden die Polyisocyanate (b) und die Komponenten (a) und ggf. (f) in solchen Mengen zur Umsetzung gebracht, dass die Isocyanat-Kennzahl der Rezeptur > 100, in der Regel 110 bis 600, bevorzugt 150 bis 500, besonders bevorzugt 180 bis 450 beträgt.

Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Die PUR/PIR-Hartschaumstoffe können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren. Ein bevorzugtes Verfahren ist das kontinuierliche Doppelbandverfahren zur Herstellung von Verbundelementen enthaltend PUR/PIR-Hartschaumstoffkerne und eine oder mehrere Deckschicht(en), wobei als Deckschichten flexible und/oder starre Materialien verwendet werden können.

Materialien, aus denen die Deckschicht besteht, sind beispielsweise Beton, Holz, Pressspan, Aluminium, Kupfer, Stahl, Edelstahl, Papier, Mineralvliese und Kunststoff sowie Mehrlagenverbünde. Bevorzugte Kunststoffe sind Acrylnitril-Butadien-Styrol-Copolymere, Polyethylen, Polystyrol, Polyvinylchlorid und Polypropylen. Die Art der Deckschicht ist dabei grundsätzlich nicht begrenzt; es kann sich um Formteile, Konstruktionselemente aus dem Bauwesen, Rohre, Gehäuseteile, etc. handeln.

Die erfindungsgemäßen Polyurethanhartschaumstoffe umfassend PUR- und bevorzugt PUR-/PIR-Hartschaumstoffe weisen bevorzugt eine Geschlossenzelligkeit grösser 90 %, besonders bevorzugt größer 95% auf.

Bevorzugt weisen die erfindungsgemäßen PUR-, bzw. PUR-/PIR-Schäume eine Dichte von 25 g/m$^3$ bis 300 g/m$^3$, besonders bevorzugt von 28 g/m$^3$ bis 50 g/m$^3$ auf.

Der Einsatz der erfindungsgemäßen Polyurethanhartschaumstoffe erfolgt insbesondere zur Wärmedämmung, beispielsweise von Kühlgeräten, Behältern oder Gebäuden, z.B. in Form von gedämmten Rohren, Sandwichelementen, Dämmplatten oder als Dämmschicht in Kühlgeräten.

Die Erfindung soll anhand der nachfolgenden Beispiele näher erläutert werden.

**Beispiele**

In den Beispielen kamen folgende Analysenmethoden zum Einsatz:

Hydroxylzahl:   Die Bestimmung der OH-Zahl erfolgte gemäß der Vorschrift der DIN 53240-1 (Verfahren ohne KatalysatorFassung v. Juni 2013).

Säurezahl:   nach DIN EN ISO 2114 (Fassung v. Juni 2002)

Wärmeleitzahl:   nach DIN EN 12667 (Fassung v. Mai 2001) bei einer Temperaturdifferenz von 20 K und einer Mittentemperatur von 10 °C.

Abbindezeit:   Die Abbindezeit ("Gelpunkt $t_G$") wird ermittelt, indem man ein Holzstäbchen in die reagierende Polymerschmelze eintaucht und wieder herausnimmt. Sie charakterisiert den Zeitpunkt, ab dem sich die Polymerschmelze verhärtet. Als $t_G$ wird der Zeitpunkt angegeben, an dem sich erstmalig Fäden zwischen Holzstab und Polymerschmelze ziehen lassen.

Startzeit:   Die Zeitspanne, die vom Start der Vermischung der Hauptkomponenten bis zum sichtbaren Schäumbeginn des Gemisches verstreicht.

Rohdichte:   Die Rohdichten wurde gemäß DIN EN ISO 3386-1 (Fassung v. Sep. 2010) ermittelt.

Dimensionsstabilität:   Wird bestimmt, indem man bei Raumtemperatur die genauen Abmessungen eines quaderförmigen Probenkörpers, der aus einem Schaumblock so aussägt wurde, daß er ein Volumen von mindestens 100 cm$^3$ aufweist und keine Randzonenverdichtungen enthalten sind, wobei mindestens 12 Stunden zwischen Schaum- und Probenkörperherstellung liegen, bestimmt. Den so erhaltenen Prüfkörper lagert man für die angegebene Zeit (z.B. 24 Std.) bei erhöhter Temperatur (z.B. 100 °C), und bestimmt nach 30 minütigem Abkühlen auf Raumtemperatur erneut dessen Dimensionen. Man gibt die relativen Änderungen der Abmessung in Prozent der jeweils ursprünglichen Abmessungen an.

Viskosität:   Dynamische Viskosität: Rheometer MCR 51 der Firma Anton Paar entsprechend DIN 53019-1 (Fassung v. September 2008) mit einem Messkegel CP 50-1, Durchmesser 50 mm, Winkel 1° bei Scherraten von 25, 100, 200 und 500 s$^{-1}$. Die erfindungsgemäßen und nicht erfindungsgemäßen Polyole zeigen von der Scherrate unabhängige Viskositätswerte.

Brandeigenschaften:   Wurden gemäß DIN EN ISO 11925-2 (Fassung v. Feb. 2011) und DIN 4102-1 (Fassung v. Mai 1998) bestimmt.

**Verwendete Rohstoffe**

Levagard PP:   Trischlorisopropylphosphat; Flammschutzmittel für PUR-Hartschaumstoffe und Duroplaste der Fa. Lanxess

DMCHA   Jeffcat DMCHA; N,N-Dimethylcyclohexylamin der Fa. Huntsman

Tegostab B 8421:   Schaumstabilisator (Evonik).

Desmorapid® 726B:   Aktivator der Fa. Covestro Deutschland AG zur Herstellung von Polyurethan (PUR)-Hartschaumstoff.

Additiv 1132:   Baymer Additiv der Fa. Covestro Deutschland AG.

Desmorapid DB:   N,N-Dimethylbenzylamin, Katalysator (Lanxess AG).

Desmorapid 1792:   Katalysator (Fa. Covestro Deutschland AG).

c-/i-Pentan:   Cyclopentan/Isopentan 30/70 Gew.-%, Treibmittel der Firma Azelis Deutschland GmbH

Isocyanat:   Gemisch aus monomerem und polymeren MDI, einem NCO-Wert von ca. 31,5 Massen-% und einer Viskosität von ca. 290 m Pa s bei 20 °C (Desmodur® 44V20L, BMS AG)

STEPANPOL PS-2352:  Modifiziertes aromatisches Polyesterpolyol der Fa. Stepan mit verbesserter Kompatibilität zu Treibmitteln mit einer Viskosität von 3000 mPas (25 °C), einer Hydroxylzahl von 240 mg KOH/g, einer Säurezahl von 0,8 mg KOH/g, sowie einer Funktionalität von 2,0.

Bisphenol A:  Bisphenol A der Fa. Aldrich

NMI:  N-Methylimidazol der (BASF SE)

DMAE:  N,N-Dimethylaminoethanol (Aldrich)

EO:  Ethylenoxid (Ineos)

PO:  Propylenoxid der (Lyondell)

Irganox® 1076:  Octadecyl-3-(3,5-di-*tert*-butyl-4-hydroxyphenyl)propionate, Antioxidans (BASF SE)

BPA-Harz:  BPA-Harz der Fa. Bayer MaterialScience AG; enthaltend ca. 44 % Gew.-% 4,4'-Isopropylidendiphenol, 20 Gew.-%, 2,4'- und 2,2'-Isopropylidendiphenol, und 36 Gew.-% Komponenten, die Strukturelemente enthalten, welche von Phenol, Aceton und / oder Isopropylidendiphenol abgeleitet sind, aber nicht Isomere des Isopropylidendiphenols sind

Milchsäure:  85%ig, wässrig, Sigma-Aldrich

**A1.) Herstellung von nicht neutralisiertem, alkoxyliertem BPA-Harz**

**Herstellungsvorschrift für die BPA-Harz-Ethoxylierung am Beispiel des Polyols A1.2**

811,1 g BPA-Harz und 2,419 g DMAE wurden in einem 2 1 Laborautoklaven bei 80 °C vorgelegt. Sauerstoff wurde nach Schließen des Befüllstutzens durch jeweils dreimaliges Befüllen der Apparatur mit 3,0 bar (Absolutdruck) Stickstoff und anschließendes Ablassen des Überdrucks auf Atmosphärendruck entfernt. Bei einer Rührerdrehzahl von 200 U/min. (Kreuzbalkenrührer) wurde der Inhalt des Autoklaven auf 120 °C aufgeheizt. Hierbei stellte sich gegen Ende der Aufheizphase ein Absolutdruck von 1,32 bar ein. Die Rührerdrehzahl wurde auf 800 U/min erhöht und es wurden dann 800,1 g EO über einen Zeitraum von 8,12 h in den Autoklaven dosiert. Gegen Ende der Dosierphase erreichte der Absolutdruck im Reaktor den Maximalwert von 4,8 bar. Nach einer Nachreaktionszeit von 21 h wurde ein Absolutdruck von konstant 2,9 bar erreicht. Das Produkt wurde sodann 0,5 h im Vakuum bei 120 °C ausgeheizt. Nach Abkühlen auf 80 °C wurden 0,811 g Irganox® 1076 zugegeben. Die OH-Zahl des Produktes betrug 223 mg KOH/g und die Viskosität bei 25°C 3760 mPas.

Die Polyole A1.1, A1.3, A1.4 und A1.5 wurden gemäß den Angaben der für das Polyol A1.2 beispielhaft angegebenen Herstellvorschrift und unter Einsatz der in Tabelle 1 angegebenen Rohstoffeinsatzmengen gefertigt. In Tabelle 1 sind darüberhinaus auch analytische Daten und physikalische Eigenschaften der Polyole aufgelistet.

**Tabelle 1A: Herstellung und Eigenschaften der nicht neutralisierten Polyole**

| Polyol | | A1.1 | A1.2 | A1.3 | A1.4 | A1.5 |
|---|---|---|---|---|---|---|
| BPA-Harz | [g] | 774,8 | 811,1 | 817,9 | 615,4 | |
| Bisphenol A | [g] | | | | | 679,7 |
| Toluol | [ml] | | | | | 160[2)] |
| PO | [g] | 764,4 | - | - | - | - |
| EO | [g] | - | 800,1 | 807,0 | 592,1 | 820,1 |
| Katalysator | | NMI | DMAE | KOH[1)] | NMI | NMI |
| Katalysator-Konzentration | [ppm] | 1500 | 1500 | 300 | 1500 | 1500 |
| Hydroxylzahl | [mg KOH/g] | 212 | 223 | 211 | 210 | 225 |

(fortgesetzt)

| Polyol | | A1.1 | A1.2 | A1.3 | A1.4 | A1.5 |
|---|---|---|---|---|---|---|
| Viskosität | [mPas], 25 °C | 17650 | 3760 | 4695 | 5685 | 2600 |

[1]: KOH wurde als 45 gew.-%ige wässrige Lösung zugegeben, nach Reaktion, Nachreaktion und Vakuumschritt wurde mit Milchsäure neutralisiert, indem man Milchsäure im molaren Verhältnis von 1,2:1 zur eingesetzten KOH als 85 gew.-%ige Lösung in Wasser zusetzte. Das bei der Neutralisation eingetragene Wasser wurde durch Ausheizen über einen Zeitraum von 3 h bei 110 °C entfernt.

[2]: Aufgrund des hohen Schmelzpunktes von Bisphenol-A (155 °C) wurde Toluol als inertes Lösungsmittel eingesetzt. Letzteres wurde nach beendeter Reaktion abdestilliert, zuletzt im Hochvakuum bei 120 °C.

**Tabelle 1B: Herstellung und Eigenschaften weiterer nicht neutralisierten Polyole**

| Polyol | | A1.6[3] | A1.7[3] | A1.8[3] | A1.9[3] | A1.10[3] |
|---|---|---|---|---|---|---|
| BPA-Harz | [g] | 555,4 | 491,5 | 498,2 | 2496,6 | 2500,6 |
| EO | [g] | 674,2 | 718,2 | 728 | 3647,6 | 3653,5 |
| Katalysator | | DMCHA | DMCHA | DMCHA[4] | DMCHA | DMCHA |
| Katalysatorkonzentration | [ppm] | 2033 | 2990 | 3986[2] | 4024 | 3989 |
| Hydroxylzahl | [mg KOH/g] | 204 | 190 | 182 | 185 | 192 |
| Viskosität | [mPas], 25 °C | 2460 | 2055 | 1505 | 1587 | 1663 |

[3]: A1.6, A1.7 und A1.8 wurden in einem 2 1 Autoklaven hergestellt, A1.9 und A1.10 wurden in einem 101 Autoklaven hergestellt.

[4]: Das Dimethylcyclohexylamin wurde dem Reaktionsgemisch in zwei gleichgroßen Portionen zugeführt: die erste Hälfte war von Beginn an zugegen, die zweite Hälfte wurde zugegeben, nachdem 500 g Ethylenoxid dosiert worden waren.

## A2.) Herstellung von neutralisiertem, alkoxyliertem BPA-Harz

**Herstellungsvorschrift für die BPA-Harz-Ethoxylierung und Neutralisation am Beispiel des Polyols A2.5 :**

2150,8 g BPA-Harz und 7,19 g NMI wurden in einem 10 1 Laborautoklaven bei 80 °C vorgelegt. Sauerstoff wurde nach Schließen des Befüllstutzens durch jeweils dreimaliges Befüllen der Apparatur mit Stickstoff bei einem Absolutdruck von 3,0 bar und anschließendes Ablassen des Überdrucks auf Atmosphärendruck entfernt. Bei einer Rührerdrehzahl von 200 U/min. (Gitterrührer) wurde der Inhalt des Autoklaven auf 120 °C aufgeheizt. Hierbei stellte sich gegen Ende der Aufheizphase ein Absolutdruck von 1,23 bar ein. Die Rührerdrehzahl wurde auf 450 U/min erhöht und es wurden dann 2613,5 g EO über einen Zeitraum von 5,52 Stunden in den Gasraum des Autoklaven dosiert. Gegen Ende der Dosierphase stellte sich im Reaktor ein Absolutdruck von 4,4 bar ein. Nach einer Nachreaktionszeit von 1,2 Stunden wurde das Produkt 0,9 Stunden im Vakuum bei 120 °C ausgeheizt. Nach Abkühlen auf 80 °C wurden 73,142 g einer wässrigen, 11,74 gew.-%igen Schwefelsäurelösung zugegeben und es wurde bei 80 °C 30 min. lang gerührt. Danach wurden 2,374 g Irganox® 1076 hinzugefügt und nach weiteren 30 min. Rühren bei 80 °C wurde das Produkt in einen Glaskolben abgelassen. Nach Luft-Stickstoff-Austausch wurden 952 g destilliertes Wasser bei 120 °C über einen Zeitraum von 10,25 Stunden über einen Tropftrichter mit Hilfe eines Teflon-Schlauches unter die Flüssigkeitsoberfläche unter Rühren eingeleitet und der Kolbeninhalt so bei gleichzeitig angelegtem Vakuum gestrippt. Nach beendeter Wasserzugabe wurde noch über einen Zeitraum von 2 Stunden bei 120 °C im Vakuum ausgeheizt. Die OH-Zahl des Produktes betrug 190 mg KOH/g und die Viskosität bei 25°C 3100 mPas.

Die Polyole A2.1, A2.2, A2.3 und A2.4 wurden gemäß den Angaben der für das Polyol A2.5 beispielhaft angegebenen Herstellvorschrift und unter Einsatz der in Tabelle 2 angegebenen Rohstoffeinsatzmengen gefertigt. In Tabelle 2 sind darüberhinaus auch analytische Daten und physikalische Eigenschaften der Polyole aufgelistet.

**Tabelle 2: Herstellung und Eigenschaften der neutralisierten Polyole**

| Polyol | | A2.1 | A2.2 | A2.3 | A2.4 | A2.5 |
|---|---|---|---|---|---|---|
| BPA-Harz | [g] | 3032,3 | - | 756,8 | 817,9 | 2150,8 |
| EO | [g] | 2991,5 | - | 746,4 | 807,0 | 2613,5 |
| Katalysator | | NMI | - | DMAE | KOH[1] | NMI |
| Katalysatorkonzentration | [ppm] | 1500 | - | 1500 | 300 | 1500 |
| Polyol A2.1 | [g] | - | 2172,4 | - | - | - |
| Hydroxylzahl | [mg KOH/g] | 210 | 210 | 211 | 211 | 190 |
| Irganox 1076 | [g] | 3,042 | - | 0,756 | 0,863 | 2,734 |
| Viskosität | [mPas], 25 °C | 5685 | n. b. | 4760 | 4695 | 3100 |
| Neutralisationsagenz | | keines | Schwefelsäure[2] | Schwefelsäure[2] | Milchsäure | Schwefelsäure[2] |
| Menge Neutralisationsagenz | [g] | 0 | 33,2469 (11,83 %ig) | 6,067 (11,83 %ig) | 1,137 | 73,142 (11,74 %ig) |

[1]: KOH wurde als 45 gew.-%ige wässrige Lösung zugegeben, nach Reaktion, Nachreaktion und Vakuumschritt wurde mit Milchsäure neutralisiert, indem man Milchsäure im molaren Verhältnis von 1,2:1 zur eingesetzten KOH als 85 gew.-%ige Lösung in Wasser zusetzte. Das hierbei eingetragene Wasser wurde durch Ausheizen über einen Zeitraum von 3 Stunden bei 110 °C entfernt.

[2]: Schwefelsäure: Es wurde eine wässrige Schwefelsäurelösung mit der angegebenen Konzentration (Gew.-%) eingesetzt.

**B1.) Herstellung der PUR/PIR-Schäume unter Verwendung nicht neutralisierter Polyole (A1.x)**

Mit den Polyolen aus Beispiel A1.1, A1.2, A1.3, A1.4, A1.5, sowie mit Stepanol PS 2353 wurden im Labor PUR/PIR-Hartschaumstoffe hergestellt. Dazu wurden dem jeweiligen Polyol Flammschutzmittel, Schaumstabilisator, Katalysatoren, Wasser und Treibmittel zugesetzt.

Die so erhaltene Isocyanat-reaktive Zusammensetzung wurde mit dem Isocyanat vermischt und in eine Form ausgegossen. Die Mischung selbst wurde mit einem Rührer bei 4200 U/min und 23 °C Rohstofftemperatur hergestellt. Die genauen Rezepturen inklusive der Ergebnisse entsprechender physikalischer Untersuchungen sind in Tabelle 3 zusammengefasst.

**Tabelle 3:** Herstellung und Eigenschaften der PUR/PIR-Schäume B1.x aus den Polyolen A1.x

| Formulierung: | | B1.1 | B1.2 | B1.3 | B1.4 | B1.5 | B1.6 | B1.7 |
|---|---|---|---|---|---|---|---|---|
| Polyol A1.1 | [g] | 78 | 78 | | | | | |
| STEPANPOL PS-2352 | [g] | | | 78 | | | | |
| Polyol A1.2 | [g] | | | | 78 | | | |
| Polyol A1.3 | [g] | | | | | 78 | | |
| Polyol A1.4 | [g] | | | | | | 78 | |
| Polyol A1.5 | [g] | | | | | | | 78 |
| Levagard PP | [g] | 15 | 15 | 15 | 15 | 15 | 15 | 15 |
| Tegostab B8421 | [g] | 2 | 2 | 2 | 2 | 2 | 2 | 2 |
| Wasser | [g] | 1,2 | 1,2 | 1,2 | 1,2 | 1,2 | 1,2 | 1,2 |
| Desmorapid 1792 | [g] | 5 | 2,4 | 2,6 | 2,3 | 2,6 | 2,4 | 2,1 |
| DMCHA | [g] | 1,2 | 0,2 | 0,9 | 0,3 | 0,3 | 0,2 | 0,3 |
| c-/i-Pentan | [g] | 15 | 15 | 15 | 15 | 15 | 15 | 15 |
| Isocyanat | [g] | 210 | 210 | 210 | 210 | 210 | 210 | 210 |
| Isocyanat -Index | | 327 | 325 | 309 | 327 | 336 | 339 | 327 |
| **Eigenschaften:** | | | | | | | | |
| Startzeit | [s] | 8 | 25 | 9 | 7 | 8 | 8 | 9 |
| Abbindezeit | [s] | 65 | 205 | 38 | 47 | 44 | 47 | 42 |
| Dimensionsstabilität nach 24 h bei 100 °C und 30 min bei RT in Länge, Breite und Dicke | | $\leq$ +/- 0,5 | | | | | | |
| Dimensionsstabilität nach 24 h bei -22 °C und 30 min bei RT in Länge, Breite und Dicke | | $\leq$ +/- 0,2 | | | | | | |
| KBT[1] Flammenposition | | Kante | | Kante | Kante | Kante | Kante | Kante |
| Mittlere Flammenhöhe | [mm] | 200 | n.b. | 125 | 134 | 129 | 130 | 148 |
| Klassifizierung bei Brandprüfung nach DIN 4102-1 | | B3 | n.b. | B2 | B2 | B2 | B2 | B3 |
| Rohdichte | [kg/m$^3$] | 34 | 37 | 33,0 | 34,5 | - | 33,5 | 34,5 |
| Wärmeleitzahl bei Mittentemperatur 10 °C | [mW/Km] | 22,2 | 24,7 | 20,2 | 20,4 | | 20,5 | n.b.[2] |
| KBT[1] : Kleinbrennertest DIN 4102-1 [2]n.b.: nicht bestimmt | | | | | | | | |

Beim Beispiel B1.3 handelt es sich um eine auf einem Polyesterpolyol basierende Formulierung, die einen Marktstandard darstellt. B1.3 dient zur Orientierung hinsichtlich der Eigenschaften, die von erfindungsgemäßen Beispielen in etwa erreicht werden müssen.

Das der koreanischen Anmeldung KR 2002 0065658 A nachempfundene, nicht erfindungsgemäße Beispiel B1.2 ist zum einen in Folge der hohen Viskosität des Polyols A1.1, basierend auf propoxyliertem BPA-Harz (siehe auch Tabelle 1) auf Standardanlagen nicht verarbeitbar, zum anderen erweist es sich bei mit B1.3 vergleichbarer Katalyse als reaktionsträge (siehe Tabelle 3, Start- und Abbindezeit).

## B2.) Herstellung der PUR/PIR-Schäume unter Verwendung neutralisierter Polyole (A2.x)

Mit den Polyolen aus Beispiel A2.1, A2.2, A2.4, sowie mit Stepanol PS 2353 wurden im Labor PUR/PIR-Hartschaumstoffe hergestellt. Dazu wurden dem jeweiligen Polyol Flammschutzmittel, Schaumstabilisator, Katalysator, Wasser und Treibmittel zugesetzt.

Die so erhaltene Isocyanat-reaktive Zusammensetzung wurde mit dem Isocyanat vermischt und in eine Form ausgegossen. Die Mischung selbst wurde mit einem Rührer bei 4200 U/min und 23 °C Rohstofftemperatur hergestellt. Die genauen Rezepturen inklusive der Ergebnisse entsprechender physikalischer Untersuchungen sind in Tabelle 4 zusammengefasst.

**Tabelle 4:** Herstellung und Eigenschaften der PUR/PIR-Schäume B2.x aus den Polyolen A2.x

| Formulierung: | | B2.1 | B2.2 | B2.3 |
|---|---|---|---|---|
| STEPANPOL PS-2352 | [g] | 78 | | |
| Polyol A2.1 | [g] | | | |
| Polyol A2.2 | [g] | | 78 | |
| Polyol A2.4 | [g] | | | 78 |
| Levagard PP | [g] | 15 | 15 | 15 |
| Tegostab B8421 | [g] | 2 | 2 | 2 |
| Wasser | [g] | 1.2 | 1.2 | 1,2 |
| Desmorapid 1792 | [g] | 2.6 | 2.4 | 2,6 |
| DMCHA | [g] | 0.9 | 0.6 | 0,3 |
| c-/i-Pentan 30/70 | [g] | 15 | 15 | 15 |
| Isocyanat | [g] | 210 | 210 | 210 |
| Isocyanat-Index | | 309 | 324 | 336 |
| Eigenschaften: | | | | |
| Startzeit | [s] | 9 | 7 | 8 |
| Abbindezeit | [s] | 38 | 41 | 44 |
| Schaumkern | | zäh | zäh | zäh- |
| Dim. Stab. Temperatur: 100°C | | | | |
| Dim. Stab. 24h L1 | [%] | 0 | 0 | 0,1 |
| Dim. Stab. 24h L2 | [%] | -0.2 | 0.2 | -0,1 |
| Dim. Stab. 24h D | [%] | -0.2 | -0.2 | -0,2 |
| Dim. Stab. Temperatur: -22 °C | | | | |
| Dim. Stab. 24h L1 | [%] | 0 | -0.3 | 0 |
| Dim. Stab. 24h L2 | [%] | -0.1 | -0.3 | 0 |
| Dim. Stab. 24h D | [%] | 0.1 | 0.1 | 0,1 |
| KBT. Flammenposition | | Kante | Kante | Kante |
| Klassifizierung nach EN 11925 | | E | E | E |
| Rohdichte | [kg/m$^3$] | 33.0 | 35 | 32.9 |

(fortgesetzt)

| Eigenschaften: | | | | |
|---|---|---|---|---|
| Wärmeleitzahl bei Mittentemperatur 10 °C | [mW/K m] | 20,2 | 20,4 | n.b.[2] |
| KBT[1] : Kleinbrennertest nach EN 11925 [2]n.b.: nicht bestimmt | | | | |

Beim Beispiel B2.1 handelt es sich um eine auf dem Polyesterpolyol STEPANPOL PS-2352 basierende Formulierung, die einen Marktstandard darstellt. B2.1 dient zur Orientierung hinsichtlich der Eigenschaften, die von den erfindungsgemäßen Beispielen in etwa erreicht werden müssen.

**B3.) Herstellung der PUR/PIR-Schäume unter Verwendung nicht neutralisierter Polyole (A1.x), wobei die Schäume mittels Hochdruckvermischung hergestellt wurden**

Die Herstellung der Schäume nach B3.) erfolgt mittels eines sog. Laborkolbendosiergerätes basierend auf der Reaction Injection Molding (RIM)-Technologie.

**Tabelle 5:** Formulierung und Eigenschaften der PUR/PIR-Schäume B3.x aus den Polyolen A1.x, wobei die Schäume mittels Hochdruckvermischung hergestellt wurden

| Formulierung: | | B3.1(V) | B3.2 | B3.3 |
|---|---|---|---|---|
| Stepanpol PS 2352 | [g] | 78 | | |
| Polyol A1.9 | [g] | | 78 | |
| Polyol A1.10 | [g] | | | 78 |
| Levagard PP | [g] | 15 | 15 | 15 |
| Tegostab B8421 | [g] | 2 | 2 | 2 |
| Wasser | [g] | 1,2 | 1,2 | 1,2 |
| Additiv 1132 | [g] | | 0,8 | 0,8 |
| Desmorapid 1792 | [g] | 2,2 | 3,1 | 3,1 |
| Desmorapid 726B | [g] | 0,9 | 0,3 | 0,3 |
| c-/i-Pentan 30/70 | [g] | 18 | 18 | 18 |
| Isocyanat | [g] | 210 | 210 | 210 |
| Isocyanat-Index | | 313 | 350 | 342 |
| **Eigenschaften:** | | | | |
| Startzeit | [s] | 5 | 3 | 3 |
| Abbindezeit | [ s] | 24 | 23 | 21 |
| Rohdichte | [kg/m$^3$] | 28,7 | 30,7 | 30,4 |
| Schaumkern | | zäh | zäh | zäh |
| Dim. Stab. Temperatur: 100 °C | | | | |
| Dim. Stab. 24h L1 | [%] | 0,4 | 0,1 | 0,3 |
| Dim. Stab. 24h L2 | [%] | 0,3 | 0,1 | 0,1 |
| Dim. Stab. 24h D | [%] | -0,3 | -0,3 | -0,2 |
| Dim. Stab. Temperatur: - 22 °C | | | | |
| Dim. Stab. 24h L1 | [%] | -0,2 | -0,1 | -0,1 |
| Dim. Stab. 24h L2 | [%] | -0,1 | 0,0 | -0,1 |
| Dim. Stab. 24h D | [%] | 0,1 | 0,1 | 0,0 |

(fortgesetzt)

| Eigenschaften: | | | | |
|---|---|---|---|---|
| Dim. Stab. Temperatur: 70 °C/95% relative Feuchte | | | | |
| Dim. Stab. 24h L1 | [%] | 3,1 | 2,7 | 2,1 |
| Dim. Stab. 24h L2 | [%] | 3,4 | 2 | 2 |
| Dim. Stab. 24h D | [%] | -0,4 | 0 | 0,2 |
| Dim. Stab. 7d L1 | [%] | 2,5 | 2,8 | 2,5 |
| Dim. Stab. 7 d L2 | [%] | 2,8 | 2,3 | 2,4 |
| Dim. Stab. 7 d D | [%] | 0 | 0.1 | 0.3 |
| KBT nach EN 11925. Flammenposition | | Kante | Kante | Kante |
| Mittlere. Flammenhöhe | [mm] | 150 | 145 | 149 |
| Kassifizierung nach EN 11925 | | E | E | E |
| Wärmeleitzahl bei Mittentemperatur 10 | | | | |
| 0-Wert | [mW/m K] | 19,90 | 19,97 | 20,22 |
| 14 Tage Laserung bei 70 °C | [mW/m K] | 23,96 | 24,51 | 24,49 |
| 1 Monat Lagerung bei 70 °C | [mW/m K] | 24,63 | 24.96 | 24.85 |
| KBT: Kleinbrennertest nach EN 11925 | | | | |

Tabelle 5 zeigt, dass die erfindungsgemäßen Versuche B3.2 und B3.3 bezüglich ihrer Eigenschaften den Vergleichsversuch B3.1(V) in allen wesentlichen Kenngrößen erreichen.

## Patentansprüche

1. Ethoxyliertes BPA-Harz, umfassend

   a) mindestens 10 Gew.-% eines Ethoxylates von 4,4'-Isopropylidendiphenol,
   b) mindestens 5 Gew.-%, bevorzugt mindestens 10 Gew.-%, eines Ethoxylates von 2,4'- und 2,2'-Isopropylidendiphenol, und
   c) mindestens 10 Gew.-% eines Ethoxylates von Komponenten, die Strukturelemente enthalten, welche von Phenol, Aceton und / oder Isopropylidendiphenol abgeleitet sind, aber nicht Isomere des Isopropylidendiphenols sind.

2. Ethoxyliertes BPA-Harz gemäß Anspruch 1 mit einer Hydroxylzahl von 100 bis 400 mg KOH/g, bevorzugt 120 bis 300, besonders bevorzugt 130 bis 250 und einer bei 25 °C gemessenen Viskosität von 600 bis 10000 mPas, bevorzugt 800 bis 8000, besonders bevorzugt 1000 bis 6000.

3. Verfahren zur Herstellung eines ethoxylierten BPA-Harzes gemäß Anspruch 1, umfassend den Schritt der Umsetzung von einem BPA-Harz enthaltend mindestens 10 Gew.-% 4,4'-Isopropylidendiphenol, mindestens 5 Gew.-% der 2,4'- und 2,2'-Isomeren des Bisphenol-Grundkörpers und mindestens 10 Gew.-% an Verbindungen mit Chroman- und/oder Indan-Grundkörpern mit einem ethylenoxidhaltigen Alkylenoxidgemisch enthaltend mindestens 50 Gew.-% Ethylenoxid, bevorzugt mindestens 70 Gew.-% Ethylenoxid, besonders bevorzugt mindestens 90 Gew.-% Ethylenoxid, insbesondere bevorzugt mindestens 95 Gew.-% und ganz besonders bevorzugt 100 Gew.-% Ethylenoxid.

4. Verfahren gemäß Anspruch 3, **dadurch gekennzeichnet, dass** die Umsetzung in homogener Phase durchgeführt wird.

5. Verfahren gemäß Anspruch 3 oder 4, **dadurch gekennzeichnet, dass** bei der Umsetzung pro Mol phenolischer Hydroxylgruppe im BPA-Harz mindestens 1,5 Mole eines ethylenoxidhaltigen Alkylenoxidgemischs eingesetzt werden.

6. Verfahren gemäß Anspruch 4 oder 5, **dadurch gekennzeichnet, dass** die Umsetzung unter Verwendung von tertiären Aminen mit aliphatischen, cycloaliphatischen, aromatischen und/oder araliphatischen an das Stickstoffatom gebundenen Resten, und/oder aromatischen Aminen stattfindet.

7. Verfahren gemäß Anspruch 6, **dadurch gekennzeichnet, dass** das Amin nach der Umsetzung des BPA-Harzes mit dem ethylenoxidhaltigen Alkylenoxidgemisch neutralisiert wird.

8. Verfahren gemäß Anspruch 3-7, **dadurch gekennzeichnet, dass** bei der Umsetzung kein Lösungsmittel anwesend ist.

9. Ethoxyliertes BPA-Harz, erhältlich nach einem Verfahren gemäß einem der Ansprüche 3 - 8.

10. Verfahren zur Herstellung eines PUR/PIR-Hartschaumes, bei dem

   a) eine Polyolkomponente
   c) wenigstens ein Treibmittel,
   d) wenigstens ein Katalysator,
   e) gegebenenfalls wenigstens ein Flammschutzmittel und/oder weitere Hilfs- und Zusatzstoffe, und
   f) gegebenenfalls wenigstens eine weitere Verbindung mit mindestens zwei gegenüber Isocyanaten reaktiven Gruppen,

   mit einem Polyisocyanat b) umgesetzt werden, **dadurch gekennzeichnet, dass** die Polyolkomponente a) ein ethoxyliertes BPA-Harz gemäß einem der Ansprüche 1, 2 oder 9 umfasst.

11. Verfahren gemäß Anspruch 10, **dadurch gekennzeichnet, dass**

   a) 19 bis 29 Gew.-% eines BPA-Harz-Ethoxylates gemäß Anspruch 1, 2 oder 9,
   c) 0,7 bis 15 Gew.-% eines Treibmittels,
   d) 0,06 bis 3 Gew.-% Katalysatoren,
   e) 0,5 bis 5 Gew.-% eines Flammschutzmittel und /oder weiteren Hilfs- und Zusatzstoffen,
   f) 0-10 Gew.-% weiterer Verbindungen mit mindestens zwei gegenüber Isocyanaten reaktiven Gruppen,

   mit b) 56 bis 74 Gew.-% eines Polyisocyanats umgesetzt werden.

12. Verfahren gemäß Anspruch 10 oder 11, bei dem mindestens ein Polyisocyanat b) ausgewählt ist aus der Gruppe bestehend aus Toluylendiisocyanat (TDI), Diphenylmethandiisocyanat (MDI) und Polyphenylen-polymethylenpolyisocyanaten (Polymer-MDI) sowie aus deren Gemischen, und bei dem mindestens ein Treibmittel c) ausgewählt ist aus der Gruppe bestehend aus Wasser, Cyclopentan, n-Pentan, iso-Pentan, Fluorkohlenwasserstoffe und teilhalogenierte Alkene mit 3 oder 4 Kohlenstoff-Atomen, sowie aus deren Gemischen.

13. Verfahren gemäß einem der Ansprüche 10 bis 12, bei dem die Verschäumung gegen wenigstens eine Deckschicht unter Bildung eines Verbundelements umfassend den PUR/PIR-Hartschaumstoff und wenigstens eine Deckschicht durchgeführt wird.

14. Verfahren nach Anspruch 13, bei dem wenigstens eine Deckschicht aus einem Material besteht, das ausgewählt ist aus der Gruppe bestehend aus:
Papier, Pappe, Beton, Holz, Pressspan, Aluminium, Kupfer, Stahl, Edelstahl und Kunststoff.

15. PUR/PIR-Hartschaumstoff, erhältlich nach einem Verfahren gemäß einem der Ansprüche 10 bis 14.

**Claims**

1. Ethoxylated BPA resin, comprising

a) at least 10 % w/w of an ethoxylate of 4,4'-isopropylidenediphenol,

b) at least 5 % w/w, preferably at least 10 % w/w, of an ethoxylate of 2,4'- and 2,2'-isopropylidenediphenol, and

c) at least 10 % w/w of an ethoxylate of components containing structural elements which are derived from phenol, acetone and / or isopropylidenediphenol, but which are not isomers of the isopropylidenediphenol.

2. Ethoxylated BPA resin according to claim 1 with a hydroxyl value of 100 to 400 mg KOH/g, preferably 120 to 300, in particular preferably 130 to 250 and a viscosity measured at 25 °C of 600 to 10000 mPas, preferably 800 to 8000, in particular preferably 1000 to 6000.

3. Method for producing an ethoxylated BPA resin according to claim 1, comprising the step of reacting a BPA resin containing at least 10 % w/w of 4,4'-isopropylidenediphenol, at least 5 % w/w of the 2,4'- and 2,2'-isomers of the bisphenol base body and at least 10 % w/w of compounds with chromane and / or indane base bodies with an ethylene oxide-containing alkylene oxide mixture containing at least 50 % w/w of ethylene oxide, preferably at least 70 % w/w of ethylene oxide, in particular preferably at least 90 % w/w of ethylene oxide, in particular preferably at least 95 % w/w and quite particularly preferably 100 % w/w of ethylene oxide.

4. Method according to claim 3, **characterised in that** the reaction is carried out in a homogeneous phase.

5. Method according to claim 3 or 4, **characterised in that**, in the reaction, at least 1.5 mols of an ethylene oxide-containing alkylene oxide mixture are used per mol of phenolic hydroxyl group in the BPA resin.

6. Method according to claim 4 or 5, **characterised in that** the reaction takes place using tertiary amines with aliphatic, cycloaliphatic, aromatic and / or araliphatic residues bound to the nitrogen atom, and / or aromatic amines.

7. Method according to claim 6, **characterised in that** the amine is neutralised after the reaction of the BPA resin with the ethylene oxide-containing alkylene oxide mixture.

8. Method according to claim 3-7, **characterised in that** no solvent is present during the reaction.

9. Ethoxylated BPA resin, obtained by a method conforming to any one of claims 3 - 8.

10. Method for producing a PUR/PIR-rigid foam, wherein

a) a polyol component

c) at least one propellant,

d) at least one catalyst,

e) if necessary, at least one flame retardant and / or further auxiliary substances and additives, and

f) if necessary, at least one further compound with at least two groups reactive with respect to isocyanates,

are reacted with a polyisocyanate b), **characterised in that** the polyol component a) comprises an ethoxylated BPA resin according to any one of the claims 1, 2 or 9.

11. Method according to claim 10, **characterised in that**

a) 19 to 29 % w/w of a BPA resin ethoxylate according to claim 1, 2 or 9,

c) 0.7 to 15 % w/w of a propellant,

d) 0.06 to 3 % w/w of catalysts,

e) 0.5 to 5 % w/w of a flame retardant and / or further auxiliary substances and additives,

f) 0-10 % w/w of further compounds with at least two groups reactive with respect to isocyanates,

are reacted with b) 56 to 74 % w/w of a polyisocyanate.

12. Method according to claim 10 or 11, wherein at least one polyisocyanate b) is selected from the group consisting of toluylene diisocyanate (TDI), diphenylmethane diisocyanate (MDI) and polyphenylene polymethylene polyisocyanates (polymeric MDI) and from mixtures thereof, and in which at least one propellant c) is selected from the group consisting of water, cyclopentane, n-pentane, iso-pentane, hydrofluorocarbons and partly-halogenated alkenes with 3 or 4 carbon atoms, and from mixtures thereof.

**13.** Method according to any one of the claims 10 to 12, wherein the foaming is carried out against at least one surface layer while forming a compound element comprising the PUR/PIR rigid foam and at least one surface layer.

**14.** Method according to claim 13, wherein at least one surface layer consists of a material selected from the group consisting of:
paper, cardboard, concrete, wood, particle board, aluminium, copper, steel, stainless steel and plastic.

**15.** PUR/PIR rigid foam, obtained according to a method conforming to any one of the claims 10 to 14.

**Revendications**

**1.** Résine de BPA éthoxylée, comprenant :

a) au moins 10 % en poids d'un éthoxylate de 4,4'-isopropylidène-diphénol,
b) au moins 5 % en poids, de préférence au moins 10 % en poids, d'un éthoxylate de 2,4'- et 2,2'-isopropylidène-diphénol, et
c) au moins 10 % en poids d'un éthoxylate de composants qui contiennent des éléments structuraux qui sont dérivés de phénol, d'acétone et/ou d'isopropylidène-diphénol, mais qui ne sont pas des isomères d'isopropylidène-diphénol.

**2.** Résine de BPA éthoxylée selon la revendication 1, ayant un indice hydroxyle de 100 à 400 mg de KOH/g, de préférence de 120 à 300, de manière particulièrement préférée de 130 à 250, et une viscosité mesurée à 25 °C de 600 à 10 000 mPas, de préférence de 800 à 8 000, de manière particulièrement préférée de 1 000 à 6 000.

**3.** Procédé de fabrication d'une résine de BPA éthoxylée selon la revendication 1, comprenant l'étape de mise en réaction d'une résine de BPA contenant au moins 10 % en poids de 4,4'-isopropylidène-diphénol, au moins 5 % en poids des isomères 2,4' et 2,2' du corps de base bisphénol et au moins 10 % en poids de composés contenant des corps de base chromane et/ou indane avec un mélange d'oxydes d'alkylène contenant de l'oxyde d'éthylène, contenant au moins 50 % en poids d'oxyde d'éthylène, de préférence au moins 70 % en poids d'oxyde d'éthylène, de manière particulièrement préférée au moins 90 % en poids d'oxyde d'éthylène, de manière notamment préférée au moins 95 % en poids et de manière tout particulièrement préférée 100 % en poids d'oxyde d'éthylène.

**4.** Procédé selon la revendication 3, **caractérisé en ce que** la réaction est réalisée dans une phase homogène.

**5.** Procédé selon la revendication 3 ou 4, **caractérisé en ce qu'**au moins 1,5 mole d'un mélange d'oxydes d'alkylène contenant de l'oxyde d'éthylène est utilisé lors de la réaction par mole de groupe hydroxyle phénolique dans la résine de BPA.

**6.** Procédé selon la revendication 4 ou 5, **caractérisé en ce que** la réaction a lieu en utilisant des amines tertiaires contenant des radicaux aliphatiques, cycloaliphatiques, aromatiques et/ou araliphatiques reliés à l'atome d'azote, et/ou des amines aromatiques.

**7.** Procédé selon la revendication 6, **caractérisé en ce que** l'amine est neutralisée après la réaction de la résine de BPA avec le mélange d'oxydes d'alkylène contenant de l'oxyde d'éthylène.

**8.** Procédé selon les revendications 3 à 7, **caractérisé en ce qu'**aucun solvant n'est présent lors de la réaction.

**9.** Résine de BPA éthoxylée, pouvant être obtenue par un procédé selon l'une quelconque des revendications 3 à 8.

**10.** Procédé de fabrication d'une mousse dure de PUR/PIR, selon lequel

a) un composant polyol,
c) au moins un agent gonflant,
d) au moins un catalyseur,
e) éventuellement au moins un agent ignifuge et/ou d'autres adjuvants et additifs, et
f) éventuellement au moins un composé supplémentaire contenant au moins deux groupes réactifs avec les isocyanates,

sont mis en réaction avec un polyisocyanate b), **caractérisé en ce que** le composant polyol a) comprend une résine de BPA éthoxylée selon l'une quelconque des revendications 1, 2 ou 9.

**11.** Procédé selon la revendication 10, **caractérisé en ce que**

a) 19 à 29 % en poids d'un éthoxylate de résine de BPA selon la revendication 1, 2 ou 9,
c) 0,7 à 15 % en poids d'un agent gonflant,
d) 0,06 à 3 % en poids de catalyseurs,
e) 0,5 à 5 % en poids d'un agent ignifuge et/ou d'autres adjuvants et additifs,
f) 0 à 10 % en poids de composés supplémentaires contenant au moins deux groupes réactifs avec les isocyanates,

sont mis en réaction avec b) 56 à 74 % en poids d'un polyisocyanate.

**12.** Procédé selon la revendication 10 ou 11, selon lequel au moins un polyisocyanate b) est choisi dans le groupe constitué par le diisocyanate de toluylène (TDI), le diisocyanate de diphénylméthane (MDI) et les polyisocyanates de polyphénylène-polyméthylène (MDI polymère), ainsi que leurs mélanges, et selon lequel au moins un agent gonflant c) est choisi dans le groupe constitué par l'eau, le cyclopentane, le n-pentane, l'iso-pentane, les hydrocarbures fluorés et les alcènes partiellement halogénés contenant 3 ou 4 atomes de carbone, ainsi que leurs mélanges.

**13.** Procédé selon l'une quelconque des revendications 10 à 12, selon lequel le moussage est réalisé contre au moins une couche de recouvrement avec formation d'un élément composite comprenant la mousse dure de PUR/PIR et au moins une couche de recouvrement.

**14.** Procédé selon la revendication 13, selon lequel au moins une couche de recouvrement est constituée par un matériau qui est choisi dans le groupe constitué par :
le papier, le carton, le béton, le bois, le carton comprimé, l'aluminium, le cuivre, l'acier, l'acier inoxydable et le plastique.

**15.** Mousse dure de PUR/PIR, pouvant être obtenue par un procédé selon l'une quelconque des revendications 10 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20020065658 A
- KR 20020065658

- US 20140243560 A1

**In der Beschreibung aufgeführte Nicht-Patentliteratur**

- **MIHAIL IONESCU.** Chemistry and Technology of Polyols for Polyurethanes. Rapra Technology Limited, 2005, 403 ff

- Kunststoffhandbuch. Polyurethane. Carl Hanser Verlag, 1966, vol. VII